# EUROPEAN PATENT SPECIFICATION

(11) **EP 0 658 966 B1**
(45) Date of publication and mention of the grant of the patent: **26.03.1997**
(21) Application number: 94119655.2
(22) Date of filing: 13.12.1994
(51) Int. Cl.: H02K 21/12

(54) **Permanent-magnet voltage generator**
Spannungsgenerator mit Permanentmagnet
Générateur de tension avec aimant permanent

(30) Priority: 15.12.1993 IT MI932631
(43) Date of publication of application: 21.06.1995
(73) Proprietor: DUCATI ENERGIA S.p.A., 40132 Bologna (IT)
(72) Inventor: Venturini, Lucio, I-40121 Bologna (IT); Regazzi, Gianni, I-40128 Bologna (IT)
(74) Representative: Coloberti, Luigi

(56) References cited:
- AU-B- 5 274 279
- US-A- 4 710 659
- US-A- 5 118 978

## Description

The present invention relates to a permanent-magnet voltage generator, or magneto generator, for generating voltages to supply the ignition systems of internal-combustion engines; in particular, the invention concerns a magneto generator particularly suitable for small single-cylinder engines which are used in manually operated machines, such as motor-driven saws, strimmers, mowers and other similar applications where the cost, dimensions and weight of the magneto generator may limit the use of the same generator as well as the machine.

As is known, many manually operated machines which are driven by a low-power combustion engine, generally a single-cylinder engine, are provided with an ignition system supplied by a special voltage generator.

The voltage generators for the applications of the abovementioned kind, in general consist of a rotor unit having permanent magnet means and designed to be connected to the shaft of the engine, and a stator unit comprising a magnetic core provided with two or three pole legs and at least one voltage generating coil which are facing the magnetic circuit of the rotor for generation of the voltages to supply the ignition system of the engine; the rotor unit in general comprises magnetic flux generating means for excitation of the stator coil, as well as an air fan generating an air flow for cooling the engine.

In the field of voltage magneto generators for single-cylinder engines, in general fully cast aluminium rotors have been proposed as the best compromise in terms of price, performance, lightness and mechanical strength. In those applications where manual operation of a machine is envisaged for long periods, low weight of the rotor together with high mechanical strength assume particular importance, for the same price and other performance features of the generator.

The use of aluminium castings for the manufacture of the rotors, even though it results in relatively light structures and high mechanical strength, with comparatively acceptable costs compared to other solutions, nevertheless involves an extremely complex manufacturing process on account of the need to position beforehand various separate parts of the magnetic circuit and/or the structure of the rotor in a mould, before casting the aluminium, with a consequent increase in costs and practical impossibility of reducing the weight of the generator below a limit which is still considered to be too high.

Other permanent-magnet voltage generators are disclosed in US-A-5118978 and AU-B-52742/79.

In US-A-5118978 the magnetic circuit of the rotor unit comprises an element made of a plurality of magnetic steel plates defining three magnetic poles at one end thereof with a permanent magnet inserted into an opening of the central magnetic pole ; a balancing portion is provided at the other end of said element ; a hub portion is an additional element.

In AU-B-52742/79 the hub portion is integral with the rotor magnetic circuit, and two pole show circumferentially spaced apart from one another hold the permanent magnet.

A scope of the present invention is to provide a voltage magneto generator for the use specified, which both has a comparatively lower cost compared to a conventional magneto generator with aluminium cast rotor, and is provided with an exceptionally light rotor while keeping the mechanical strength of the said rotor and the performance features of the entire magneto generator substantially unchanged.

A further scope of the present invention is to provide a voltage magneto generator of the aforementioned kind, in which the magnetic circuit of the rotor forms an integral part of a mechanical balancing element which can be directly connected to the shaft of the engine; in this way it is possible to incorporate this mechanically strong part of the rotor in a moulded body of plastic material designed to perform solely the function of an air fan to generate an air flow for cooling the engine, thus avoiding any need for the plastic part of the rotor to withstand the strong mechanical stresses to which a rotor is normally subjected at the high revolving speeds.

Yet another scope of the present invention is to provide a magneto generator provided with a rotor unit as defined above, comprising a magnetically conductive metal body for balancing the rotor and for providing the magnetic circuit, which can be made directly by mould and using normal sintering processes; in this way, already at the mould pressing stage, it is possible to provide said metal body with an appropriate shape, avoiding the need for subsequent machining operations and making it possible to obtain a perfectly balanced light-weight rotor at a relatively low cost.

The above can be achieved by means of a voltage magneto generator according to claim 1.

In general, according to the invention, a permanent-magnet or voltage magneto generator for supplying ignition systems of internal-combustion engines has been provided, in which the magneto generator comprises a rotor unit having a permanent-magnet for feeding a magnetically conductive circuit and a stator unit provided with a magnetically conductive core member laterally arranged to the rotor unit and comprising at least one voltage generating coil facing the magnetic circuit of the rotor, in which the rotor unit substantially comprises an elongated bar element of ferromagnetic material, having a longitudinal axes diametrally extending with respect to the same rotor; the bar element is embedded in a moulded body of plastic material in the form of an air fan for generating a flow of air for cooling the engine, and in which said bar element comprises a central hub portion for connection to the drive shaft, a pair of pole shoes of opposite polarities spaced apart and longitudinally extending at one end of said bar element and on one side of said hub, towards a peripheral surface of the rotor, as well as a balancing portion diametrally extending on the opposite side. A permanent magnet has the opposite NORTH and SOUTH poles contacting and arranged between the two pole shoes for supplying with part of its flux a first open magnetic circuit on the side facing the magnetic circuit of the stator, while with the remaining portion of the flux supplies, under saturation conditions, a second closed magnetic circuit inside the bar element on the other side.

Unlike other solutions proposed hitherto, the use of two magnetically related flux circuits associated with the same permanent magnet, one of which defines an open path for the working flux upon excitation of the stator windings, while the other one defines a closed loop control path for the remaining flux, inside the said rotor, as well as the use of suitable means for keeping the closed loop magnetic circuit under saturation conditions, enables the scopes of the present invention to be achieved, in particular an extremely lightweight and high-strength rotor unit, since the mechanical stresses are not totally subjected to the metal part which defines the two magnetic circuits and the balancing portion of the rotor, enabling moreover the working flux for generation of the voltage output of the magneto generator to be controlled, by advantageously using a single permanent magnet for generation of a bipolar field.

Tests and experiments carried out have shown that it is possible to manufacture generators at costs which are 25-30% lower compared to those of conventional generators with pressure-cast aluminium rotors, and to reduce the weight of the rotor by about 40-45%; by adopting the solution according to the present invention, in fact, it is possible to obtain rotors having an extremely low weight, of between about 240 and 280 g, compared to pressure-cast aluminium rotors weighing on average between about 430 and 460 g.

A preferred embodiment of a magneto generator provided with a lightweight rotor unit according to the invention, will be illustrated in greater detail hereinbelow with reference to the accompanying drawings, in which:
- Fig. 1: is a front view of the magneto generator according to the present invention;
- Fig. 2: is a plan view of the rotor unit, along the line 2-2 of Figure 1;
- Fig. 3: is a cross-sectional view of the rotor, along the line 3-3 of Figure 1;
- Fig. 4: is a front view of the metal bar defining the magnetic circuit and the balancing element of the rotor;
- Fig. 5: is a cross-sectional view along the line 5-5 of Figure 4.

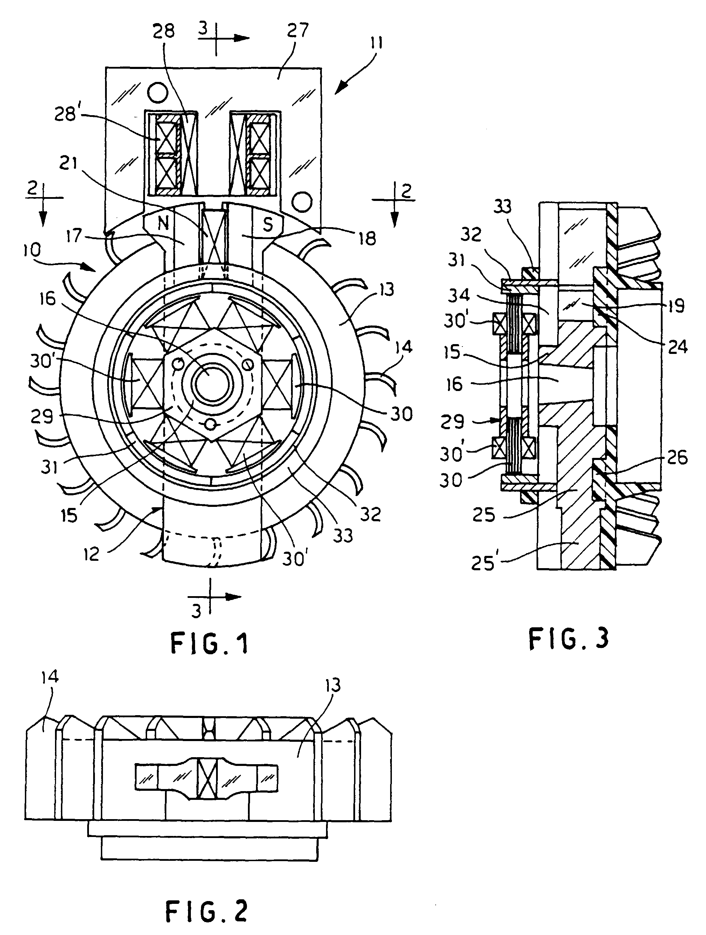

Referring to the drawings, Figure 1 shows in its entirety a permanent-magnet voltage generator or magneto generator according to the invention; as shown, the magneto generator substantially comprises a rotor unit 10 designed to be connected to the shaft of a combustion engine, provided with a magnetic system which during revolution of the rotor cyclically opposes the magnetic system of a stator 11 for generating a voltage to supply the ignition circuit of a combustion engine, or forming part of a same ignition circuit in a manner known per se.

More precisely, as shown in Figures 1 to 3, the rotor unit 10 comprises a magnetically conductive elongated element 12 in the form of a bar, made of ferromagnetic material, which extends diametrally with respect to the rotor and which is embedded in a cylindrical body 13 made of moulded plastic material, defining an air fan provided with a plurality of radial fins 14 designed to create an air flow for cooling the engine.

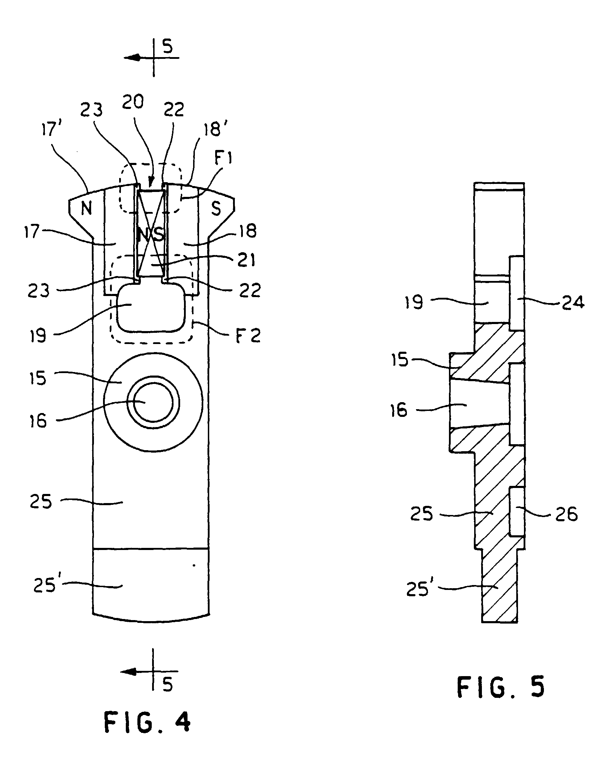

As illustrated in greater detail in Figures 4 and 5, the elongated element 12 defining the magnetic circuit of the rotor unit consists of an element in the form of a substantially rectangular bar provided with a central hub portion 15 having a conical hole 16 for connection to the shaft of the engine.

The bar element 12 is longitudinally extending on one side of the hub 15 terminating by a pair of spaced apart pole shoes 17, 18 radially extending towards the stator unit 11, and terminating with arched surfaces 17', 18' concentrically arranged to a cylindrical surface defined by the peripheral edges of the fins 14 of the air venting fan. In the example shown, the two pole shoes 17, 18 extend in a parallel manner from a wide, rectangular-shaped, through-hole 19, being kept at a suitable distance from one another by a radial slot 20 inside which a permanent magnet 21 is inserted; as shown, the two poles N and S of the magnet 21 having opposite polarities are directly in contact with internal surfaces of the slot 20 defined by the pole shoes 17, 18 so as to form corresponding polarities N and S on the end arched surfaces 17' and 18' at one end of the bar element 12. The two pole shoes 17, 18 are moreover provided with means for retaining the magnet 21, for example in the form of small opposing teeth 22 and 23 suitable for radially holding the magnet 21 and preventing it from coming out of the slot 20 owing to the action of the centrifugal forces generated by rapid revolution of the rotor.

From Figures 2 and 4 it is possible moreover to note that the two pole shoes 17, 18 widen gradually being joined together both at the end polar surfaces 17' and 18' and at the internal contact surfaces by the magnet 21, so as to ensure a homogeneous distribution and flowing of the magnetic flux.

In Figure 5, finally, reference 24 denotes a cavity of greater dimensions of the bar element 12 which embraces the quadrangular hole 19 so as to allow both correct balancing of the rotor and correct saturation of the flux in a closed magnetic circuit inside the bar element 12 as explained hereinbelow.

In Figure 4, F1 schematically denotes the flow path for part of the flux of the magnet 21 supplied along a first circuit open towards the ends of the pole shoes 17, 18, which faces the magnetic circuit of the stator unit 11 in order to generate the required electromotive forces in the windings of the generator, as explained further below.

The pole shoes 17, 18, together with the part of the bar element 12 located between the through-hole 19 and the central hub 15, define a second closed circuit, inside the rotor, supplied under saturation conditions by the remainder of the flux F2 of the magnet 21.

For the purposes of the present invention, to control flux circulation in view of the substantially tangential - or similar - arrangement of the magnetisation axis of the magnet 21, has been suggested to provide a second magnetic circuit along a closed loap inside the bar element 12 of the rotor and which works under saturation conditions; in this way, it is possible to control the quantity of working flux for the stator, since, otherwise, most or all of the flux F1 available for excitation of the voltage generator winding would be short-circuited in the closed circuit, being added to the flux F2, preventing in practice the generator from operating. Furthermore, the use of a closed loop magnetic circuit in parallel with the open circuit of the bar element 12 is suggested in order to allow an arrangement of the magnet 21 particularly suitable for a lightweight and highly resistant design of the bar element itself, such that it is able to withstand all the mechanical stresses caused by the high rotational speeds of the rotor.

In view of the above, the proportions and dimensions of the cross-sections of the bar element 12, in the region of the cavities 19 and 24, must be such as to provide at least one working section for the magnetic flux F2 which operates under conditions of magnetic saturation.

As mentioned above, the bar element 12 of the magnetic circuit of the rotor must be configured and dimensioned so as to permit also a condition of static and dynamic balancing of the entire rotor, without the need for additional machining operations. In this connection, the bar element 12 is extended on the opposite side to that of the pole shoes 17, 18 by a balancing part provided with suitable cavities 26 or with thinner parts 25' for offsetting the cavities and/or the different shape of the pole shoes 17 and 18 of the main magnetic circuit of the rotor.

In view of the geometrically simple shape of the bar element 12 and the various cavities 19, 24, 26, or the balancing part, it is possible to produce the bar element 12 by moulding and sintering, starting from ferromagnetic material in powder form, thereby reducing the production costs of the entire generator. In fact, once the bar element 12 has been produced by sintering, following insertion of the magnet 21, it is possible to arrange or more precisely incorporate the metal element 12 in the body 13 of plastic material for the air fan, which may thus be directly moulded onto the bar element 12 which thus forms the load-bearing and strengthening element for the fan itself.

As mentioned initially, the voltage generator is completed by a stator unit 11 of the conventional type, consisting for example of a magnetic core 27 provided with three polar legs opposing to the two pole shoes 17, 18 of the main magnetic circuit of the rotor; instead of the magnetic core 27 with three polar legs, it is also possible to use a conventional magnetic core with two polar legs. In both cases the stator unit 11 will be provided with a primary winding 28 and a secondary winding 28', as schematically shown, forming part of an electric ignition system for the engine with which a similar voltage generator is normally associated. Since the stator unit 11 may have any design, and does not form a substantial part of the present invention, it has been shown and described in a purely schematic form.

For certain applications it may be useful to provide the voltage generator with a secondary magnetic system and with an additional stator winding for supplying electric loads, for example for supplying the electrical resistances of a hand-warmer with which the machine to which the electric generator according to the invention is applied, may be provided.

Therefore, optionally and as schematically shown in Figures 1 and 3, on one side of the rotor unit 10 there may be provided a cylindrical cavity 34 into which a second stator unit 29 penetrates, said stator unit 29 being provided with several radial spokes 30 around which the coils 30' of an additional voltage generating winding are wound; the winding 30' is excited by the alternate poles of an annular magnetic system 31 which may indifferently be formed by a plasto-ferrite ring, a plastic material comprising a magnetisable powder or by a series of magnets, radially magnetised, which are circumferentially arranged inside a ferromagnetic ring 32 for short-circuiting the flux. The assembly consisting of the magnets 31 and the ferromagnetic ring 32 is held inside the cavity 34 of the rotor for example by means of a suitable annular shoulder 33 of the body 13, or in another suitable manner.

From the above description and the illustrations of the accompanying drawings it will be therefore evident that it has been possible to provide a permanent-magnet voltage generator particularly suitable for supplying ignition systems of small internal combustion engines, said voltage generator being provided with a rotor unit having both a lightweight and strong structure and which also has a lower cost compared to conventional generators made using other systems or technologies.

In order to reduce the overall dimensions of the rotor unit and the entire generator and in order to ensure that there is the necessary magnetic power for generating the supply voltages of the ignition system for an engine, it has proved convenient to use permanent magnets having high energy product, for example sintered permanent magnets obtained by using rare earths; good results have been achieved using magnets based on Neodymium, Iron and Boron with magnetic remanence values (Br) of between 1 and 1.2 Tesla, as well as coercive force values (Hc) of between 800 and 1000 kA/m, or magnets based on Samarium and Cobalt with magnetic remanence values (Br) of between 0.8 and 1.1 Tesla, and coercive force values (Hc) of between 600 and 800 kA/m. In general the use of rare-earth magnets with a high energy product similar to those described, is suitable for applications in a magneto generator according to the invention.

## Claims

1. A permanent-magnetic voltage generator for supplying ignition systems of internal-combustion engines, said generator comprising a rotor unit (10) provided with a magnetic circuit and designed to be actuated by said engine, as well as a stator unit (11) having an electromagnetic system provided with at least one coil (28) facing the magnetic circuit of the rotor unit (10), said rotor unit (10) comprising an air fan (13) for generating an air flow for cooling the engine, characterised in that said magnetic circuit of the rotor unit (10) comprises a magnetically conductive, substantially rectangularly shaped bar element (12), of ferromagnetic material, diametrally extending with respect to the rotor unit (10), said bar element (12) having an intermediate hub portion (15), as well as a pair of pole shoes (17, 18) circumferentially spaced apart from one another and longitudinally extending from one side of the hub portion (15) at one end of the said bar element (12), and a balancing portion (25) longitudinally extending from the said hub portion (15) towards the opposite end of the bar element (12); and in that permanent magnet means (21) are provided between said pair of pole shoes (17, 18), said permanent magnet means (21) having poles (N, S) of opposing polarities contacting said pole shoes (17, 18) for supplying with a portion of its flux (F1) a first open magnetic circuit on the side of said pole shoes (17, 18) facing the magnetic circuit of the stator unit (11), and for supplying with the remaining portion (F2) of the flux a second magnetic circuit parallely arranged inside the rotor unit (10), and in that flux control means (19, 24) are provided in said bar element (12) for maintaining said second magnetic circuit in a magnetically saturated condition.

2. A voltage generator according to Claim 1, characterised in that said flux control means (19, 24) for maintaining the second magnetic circuit of the bar element (12) in a saturated condition comprise at least one cavity (19) between said pole shoes (17, 18) and said hub portion (15) of the rotor unit, to define at least a part of the second magnetic circuit, having a smaller cross-sectional area for the flow of the flux.

3. A voltage generator according to Claim 1, characterised in that the end portion of each pole shoe (17, 18), facing the magnetic circuit of the stator unit (11) is delimited by gradually diverging surfaces.

4. A voltage generator according to Claim 1, characterised in that said pole shoes (17, 18) comprise parallelly arranged and facing surfaces provided with projection means (22, 23) for retaining said permanent magnet (21).

5. A voltage generator according to Claim 2, characterised in that said pole shoes (17, 18) are extending from said cavity (19) of the bar element (12), forming said flux control means.

6. A voltage generator according to Claim 1, characterised in that said air fan for generating the flow of air for cooling the engine is in the form of a body (13) provided with peripheral fins (14), said fan body (13) and peripheral fins (14) being made of moulded plastic material and embedding said bar element (12) of said rotor unit (10).

7. A voltage generator according to Claim 1, further characterised in that said rotor unit comprises an additional permanent magnet system (31) and additional voltage generating stator winding (30') provided in a laterally opening cavity (34) of the rotor unit (10).

8. A voltage generator according to any one of the preceding claims, characterised in that said bar element (12) is in the form of a shaped element of sintered magnetic material moulded in powder form.

9. A voltage generator according to any one of the preceding claims, characterised in that said permanent magnet means (21) consists of magnetic material comprising rare earths.

10. A voltage generator according to Claim 8, characterised in that said magnetic material has a high energy product, provided by magnetic remanence value (Br) ranging between 1 and 1.2 Tesla and by a coercive force value (Hc) ranging between 800 and 1000 kA/m, or by magnetic remanence value (Br) ranging between 0.8 and 1.1 Tesla and coercive force value (Hc) ranging between 600 and 800 kA/m.

## Patentansprüche

1. Permanentmagnetischer Spannungsgenerator zur Versorgung von Zündsystemen von Verbrennungsmotoren, der eine Rotoreinheit (10), die mit einem Magnetkreis versehen ist und vom Motor angetrieben wird, sowie eine Statoreinheit (11) enthält, die ein elektromagnetisches System besitzt, das mit wenigstens einer Spule (28) versehen ist, die dem Magnetkreis der Rotoreinheit (10) zugewandt ist, wobei die Rotoreinheit (10) ein Lüfterrad (13) zum Erzeugen einer Luftströmung zum Kühlen des Motors enthält, dadurch gekennzeichnet, daß der Magnetkreis der Rotoreinheit (10) ein magnetisch leitendes, im wesentlichen rechteckiges Stangenelement (12) enthält, das aus ferromagnetischem Material hergestellt ist und sich diametral zur Rotoreinheit (10) erstreckt, wobei das Stangenelement (12) einen mittleren Nabenabschnitt (15) und zwei Polschuhe (17, 18), die in Umfangsrichtung voneinander beabstandet sind und sich in Längsrichtung von einer Seite des Nabenabschnitts (15) an einem Ende des Stangenelements (12) erstrecken, sowie einen Wuchtabschnitt (25) besitzt, der sich in Längsrichtung vom Nabenabschnitt (15) in Richtung zum gegenüberliegenden Ende des Stangenelements (12) erstreckt; und daß zwischen den zwei Polschuhen (17, 18) eine Permanentmagneteinrichtung (21) vorgesehen ist, die Pole (N, S) mit entgegengesetzten Polaritäten besitzt, die die Polschuhe (17, 18) berühren, um einen Teil ihres Flusses (F1) in einen ersten offenen Magnetkreis auf seiten der Polschuhe (17, 18), die dem Magnetkreis der Statoreinheit (11) zugewandt sind, einzuspeisen, und um den restlichen Teil (F2) des Flusses in einen zweiten Magnetkreis, der parallel innerhalb der Rotoreinheit (10) angeordnet ist, einzuspeisen, und daß im Stangenelement (12) eine Flußsteuereinrichtung (19, 24) vorgesehen ist, um den zweiten Magnetkreis in einem Zustand der magnetischen Sättigung zu halten.

2. Spannungsgenerator nach Anspruch 1, dadurch gekennzeichnet, daß die Flußsteuereinrichtung (19, 24), die den zweiten Magnetkreis des Stangenelements (12) in einem Sättigungszustand hält, wenigstens einen Hohlraum (19) zwischen den Polschuhen (17, 18) und dem Nabenabschnitt (15) der Rotoreinheit enthält, um wenigstens einen Teil des zweiten Magnetkreises zu definieren, der eine kleinere Querschnittsfläche für das Fließen des Flusses besitzt.

3. Spannungsgenerator nach Anspruch 1, dadurch gekennzeichnet, daß der Endabschnitt jedes Polschuhs (17, 18), der dem Magnetkreis der Statoreinheit (11) zugewandt ist, durch allmählich divergierende Oberflächen begrenzt ist.

4. Spannungsgenerator nach Anspruch 1, dadurch gekennzeichnet, daß die Polschuhe (17, 18) parallel angeordnete und einander zugewandte Oberflächen enthalten, die mit Vorsprüngen (22, 23) versehen sind, um den Permanentmagneten (21) zu halten.

5. Spannungsgenerator nach Anspruch 2, dadurch gekennzeichnet, daß sich die Polschuhe (17, 18) ausgehend vom Hohlraum (19) des Stangenelements (12), das die Flußsteuereinrichtung bildet, erstrecken.

6. Spannungsgenerator nach Anspruch 1, dadurch gekennzeichnet, daß das Lüfterrad zum Erzeugen der Luftströmung zum Kühlen des Motors die Form eines Körpers (13) besitzt, der mit am Umfang angeordneten Flügeln (14) versehen ist, wobei der Lüfterradkörper (13) und die am Umfang angeordneten Flügel (14) aus gegossenem Kunststoffmaterial gefertigt sind und das Stangenelement (12) der Rotoreinheit (10) aufnehmen.

7. Spannungsgenerator nach Anspruch 1, ferner dadurch gekennzeichnet, daß die Rotoreinheit ein zusätzliches Permanentmagnetsystem (31) und eine zusätzliche Spannungsgenerator-Statorwicklung (30') enthält, die in einem seitlich offenen Hohlraum (34) der Rotoreinheit (10) vorgesehen ist.

8. Spannungsgenerator nach irgendeinem der vorangegangenen Ansprüche, dadurch gekennzeichnet, daß das Stangenelement (12) die Form eines Formelements aus gesintertem, magnetischem Material besitzt, das in Pulverform gegossen ist.

9. Spannungsgenerator nach irgendeinem der vorangegangenen Ansprüche, dadurch gekennzeichnet, daß die Permanentmagneteinrichtung (21) aus magnetischem Material besteht, das seltene Erden enthält.

10. Spannungsgenerator nach Anspruch 8, dadurch gekennzeichnet, daß das magnetische Material ein hohes Energieprodukt besitzt, bei einem magnetischen Remanenzwert (Br) im Bereich zwischen 1 und 1,2 Tesla und einem Koerzitivkraftwert (Hc) im Bereich zwischen 800 und 1000 kA/m oder bei einem magnetischen Remanenzwert (Br) im Bereich zwischen 0,8 und 1,1 Tesla und einem Koerzitivkraftwert (Hc) im Bereich zwischen 600 und 800 kA/m.

## Revendications

1. Générateur de tension à aimant permanent destiné à alimenter des systèmes d'allumage de moteurs à combustion interne, ledit générateur comprenant un rotor (10) pourvu d'un circuit magnétique et conçu pour être actionné par ledit moteur, ainsi qu'un stator (11) comportant un système électromagnétique pourvu d'au moins une bobine (28) en face du circuit magnétique du rotor (10), ledit rotor (10) comprenant un ventilateur (13) destiné à engendrer un courant d'air pour refroidir le moteur, caractérisé en ce que ledit circuit magnétique du rotor (10) comprend un élément analogue à un barreau (12) magnétiquement conducteur, qui a une forme sensiblement rectangulaire et qui est en un matériau ferromagnétique et s'étend diamétralement par rapport au rotor (10), ledit élément analogue à un barreau (12) comportant une partie moyeu intermédiaire (15) ainsi qu'une paire de pièces polaires (17, 18) espacées l'une de l'autre dans le sens de la circonférence et s'étendant dans le sens longitudinal depuis un des côtés de la partie moyeu (15) à une des extrémités dudit élément analogue à un barreau (12), et une partie d'équilibrage (25) s'étendant dans le sens longitudinal depuis ladite partie moyeu (15) en direction de l'extrémité opposée de l'élément analogue à un barreau (12); et en ce que l'aimant permanent (21) est disposé entre ladite paire de pièces polaires (17, 18), ledit aimant permanent (21) comportant des pôles (N, S) de polarités opposées en contact avec lesdites pièces polaires ((17, 18) pour alimenter avec une partie de son flux (F1) un premier circuit magnétique ouvert sur le côté desdites pièces polaires (17, 18) qui se trouve en face du circuit magnétique du stator (11) et pour alimenter avec la partie restante (F2) du flux un second circuit magnétique disposé parallèlement à l'intérieur du rotor (10) et en ce que des moyens (19, 24) de commande de flux sont présents dans ledit élément analogue à un barreau (12) pour maintenir ledit second circuit magnétique dans un état magnétiquement saturé.

2. Générateur de tension selon la revendication 1, caractérisé en ce que lesdits moyens (19, 24) de commande de flux destinés à maintenir dans un état saturé le second circuit magnétique de l'élément analogue à un barreau (12) comprennent au moins une cavité (19) entre lesdites pièces polaires (17, 18) et ladite partie moyeu (15) du rotor pour définir au moins une partie du second circuit magnétique ayant une superficie de section transversale plus petite pour la circulation du flux.

3. Générateur de tension selon la revendication 1, caractérisé en ce que la partie d'extrémité de chaque pièce polaire (17, 18), qui est située en face du circuit magnétique du stator (11), est délimitée par des surfaces qui divergent progressivement.

4. Générateur de tension selon la revendication 1, caractérisé en ce que lesdites pièces polaires (17, 18) comprennent des surfaces disposées parallèlement en face l'une de l'autre et comportant des saillies (22, 23) destinées à retenir ledit aiment permanent (21).

5. Générateur de tension selon la revendication 2, caractérisé en ce que lesdites pièces polaires (17, 18) s'étendent depuis ladite cavité (19) de l'élément analogue à un barreau (12) en formant ledit moyen de commande de flux.

6. Générateur de tension selon la revendication 1, caractérisé en ce que ledit ventilateur destiné à générer le flux d'air servant à refroidir le moteur se présente sous la forme d'un corps (13) munie d'ailettes périphériques (14), ledit corps (13) de ventilateur et les ailettes périphériques (14) étant constitués de matière plastique moulée et enrobant ledit élément analogue à un barreau (12) dudit rotor (10).

7. Générateur de tension selon la revendication 1, caractérisé, en outre, en ce que ledit rotor comprend un système d'aimant permanent supplémentaire (31) et un enroulement statorique supplémentaire (30') générant une tension et disposé dans une cavité (34) qui débouche latéralement et que comporte le rotor (10).

8. Générateur de tension selon l'une quelconque des revendications précédentes, caractérisé en ce que ledit élément (12) analogue à un barreau se présente sous la forme d'un élément profilé en matériau magnétique fritté moulé sous une forme pulvérulente.

9. Générateur de tension selon l'une quelconque des revendications précédentes, caractérisé en ce que ledit aimant permanent (21) consiste en un matériau magnétique comprenant des terres rares.

10. Générateur de tension selon a revendication 8, caractérisé en ce que ledit matériau magnétique comporte un produit à forte énergie présentant une valeur de rémanence magnétique (Br) comprise entre 1 et 1,2 Tesla et une valeur de force cercitive (Hc) comprise entre 1 et 1, 2 Tesla et une valeur de force coercitive (Hc) comprise entre 800 et 1000 kA/m, ou une valeur de rémanence magnétique (Br) comprise entre 0,8 et 1,1 Tesla et une valeur de force coercitive (Hc) comprise entre 600 et 800 kA/m..
